# EUROPEAN PATENT SPECIFICATION

(11) **EP 4 349 880 B1**
(45) Date of publication and mention of the grant of the patent: **23.04.2025**
(21) Application number: 22837914.5
(22) Date of filing: 04.07.2022
(51) Int. Cl.: C08G 63/82, C08G 63/08

(54) **METHOD FOR PREPARING POLYLACTIC ACID POLYMER**
VERFAHREN ZUR HERSTELLUNG VON POLYMILCHSÄUREPOLYMER
PROCÉDÉ DE PRÉPARATION D'UN POLYMÈRE D'ACIDE POLYLACTIQUE

(30) Priority: 05.07.2021 KR 20210087959
(43) Date of publication of application: 10.04.2024
(73) Proprietor: LG Chem, Ltd., Seoul 07336 (KR)
(72) Inventor: WOO, Won Hee, Daejeon 34122 (KR); OH, Wan Kyu, Daejeon 34122 (KR); AN, Yujin, Daejeon 34122 (KR)
(74) Representative: Hoffmann Eitle
(86) International application number: PCT/KR2022/009617
(87) International publication number: WO 2023/282562

(56) References cited:
- JP-A- 2011 506 573
- KR-A- 20110 139 142
- KR-A- 20150 094 096
- KR-A- 20160 063 885
- KR-B1- 100 501 629

## Description

### [TECHNICAL FIELD]

The present disclosure relates to a method for preparing a polylactic acid polymer, and more particularly, to a method for preparing a polylactic acid polymer that has a desired high molecular weight by using a specific catalyst in a ring-opening polymerization reaction of lactide.

### [BACKGROUND ART]

Polylactic acid (PLA) is a plant-derived resin obtained from plants such as corn, and is attracting attention as an environmentally friendly material having biodegradable characteristics and at the same time being excellent in tensile strength and elastic modulus.

Unlike petroleum-based resins conventionally used, such as polystyrene resin, polyvinyl chloride resin and polyethylene, polylactic acid has effects such as prevention of depletion of petroleum resources and suppression of carbon dioxide emission, and thus can reduce an environmental pollution, which is a disadvantage of petroleum-based plastic products. Therefore, as the problem of environmental pollution caused by waste plastics has emerged as a social problem, efforts are being made to expand the scope of application up to product fields where general plastics (petroleum-based resins) were used, such as food packaging materials, containers, and electronic product cases.

Meanwhile, polylactic acid is produced by polymerizing lactic acid produced by microbial fermentation, but direct polymerization of lactic acid produces only low molecular weight polymers. In order to synthesize high molecular weight polylactic acid, a method of polymerizing polylactic acid with a higher molecular weight using a chain coupling agent from polylactic acid with a low molecular weight obtained by direct polymerization of lactic acid is known, but there are disadvantages in that the process is complicated, a coupling agent and an organic solvent are used together, and thus, their removal is not easy.

In the production process of high-molecular-weight polylactic acid commercialized at present, a chemical synthesis method of converting lactic acid into lactide and synthesizing polylactic acid through a ring-opening reaction of lactide is used. However, even in this case, there is a problem that it is difficult to achieve a high molecular weight suitable for commercialization.

The use of tin octylate for preparing polylactic acid polymers is known, for example, from KR 100 501 629 B1.

In the case of a catalyst of Sn(Oct)₂, which is conventionally used to achieve high molecular weight, there was a problem that it has a high viscosity as a liquid catalyst, is difficult to measure accurately, and is weak against oxygen and moisture, so the stability of the catalyst itself is lowered. Particularly, there is a problem that the Sn(Oct)₂ catalyst is rapidly decomposed at high temperature, which adversely affects the color of the prepared resin and also lowers the economic efficiency.

Therefore, there is a need to develop a method for preparing a polylactic acid polymer that has excellent physical properties and can easily attain a high molecular weight so that it can be applied to various industries.

### [DETAILED DESCRIPTION OF THE INVENTION]

### [Technical Problem]

It is an object of the present disclosure to provide a method for preparing a polylactic acid polymer that has a desired degree of high molecular weight by using a specific catalyst in a lactide ring-opening polymerization reaction and controlling the rate of change in the molecular weight of the polymer according to changes in polymerization temperature within a specific range.

It is another object of the present disclosure to provide a method for preparing a polylactic acid polymer which facilitates the removal and reuse of the catalyst after completion of the reaction and is excellent in economy by using a catalyst exhibiting excellent stability even under high-temperature polymerization reaction conditions, and also which does not cause changes in physical properties of the polymer due to catalytic decomposition.

### [Technical Solution]

In order to achieve the above object, according to the present disclosure, there is provided a method for preparing a polylactic acid polymer, comprising the following step:
First, the method comprises a step of performing a ring-opening polymerization of lactide in the presence of a SnHPO₃ catalyst to prepare a polylactic acid polymer, and
a rate of change in a weight average molecular weight defined by the following Equation 1 has a positive value. Rate of change in weight average molecular weight = (M(t+30) - M(t))/M(t) * 100(%)
   M(t) is the weight average molecular weight of the polylactic acid polymer prepared according to the ring-opening polymerization reaction at a temperature of t°C,
   M₍ₜ₊₃₀₎ is the weight average molecular weight of the polylactic acid polymer prepared according to the ring-opening polymerization reaction at a temperature of t+30°C, and
   t is 150°C to 250°C.

Unless particularly mentioned herein, the term "including" or "comprising" refers to including some element (or component) without any limitation, and should not be construed as excluding addition of other elements (or components).

### (Method for preparing polylactic acid polymer)

In the production process for polylactic acid commercialized at present, a chemical synthesis method of synthesizing polylactic acid through a ring-opening reaction of a lactide ring is used. However, there is a problem that it is difficult to achieve a high molecular weight suitable for commercialization. Particularly, in the case of a Sn(Oct)₂ catalyst used to achieve a high molecular weight, there was a problem that it has a high viscosity as a liquid catalyst, is difficult to measure accurately, and is weak against oxygen and moisture, so the stability of the catalyst itself is lowered. Particularly, there was a problem that the Sn(Oct)₂ catalyst is rapidly decomposed at high temperature, which adversely affects the color of the resin to be produced and also lowers the economic efficiency.

Therefore, the present inventors have found that in the ring-opening polymerization reaction of lactic acid oligomer, a SnHPO₃ catalyst having excellent high-temperature stability is used and the reaction conditions are controlled, whereby a polylactic acid polymer having a high molecular weight can be easily prepared without reducing the catalytic activity even under high temperature conditions, and completed the present disclosure. Moreover, the catalyst can be easily removed and reused after the completion of the reaction, and thus is excellent in economy.

According to one embodiment of the present disclosure, the method includes a step of performing a ring-opening polymerization of lactide in the presence of a SnHPO₃ catalyst to prepare a polylactic acid polymer.

The SnHPO₃ catalyst is tin(II) phosphite, which is a tin (Sn) salt of a phosphite anion (PO₃⁻). The SnHPO₃ catalyst is not decomposed even under high-temperature conditions required for the ring-opening polymerization reaction of lactide, so that it is easy to remove and reuse the catalyst after completion of the reaction, and thus is excellent in economy. In addition, the SnHPO₃ catalyst is conveniently used as a solid powder-type heterogeneous catalyst.

The SnHPO₃ catalyst may be contained in an amount of 100 ppmmol to 1,000 ppmmol, preferably, 150 ppmmol to 900 ppmmol, 300 ppmmol to 700 ppmmol, 500 ppmmol to 700 ppmmol relative to the lactide. Within the above range, the ring-opening polymerization can be promoted and at the same time, the formation of by-products can be suppressed.

The ring-opening polymerization can be preferably performed at 150°C or more, 150°C to 250°C or 150°C to 240°C. Even if the SnHPO₃ catalyst is used in the above temperature range, the polymerization reaction can be easily performed without changing the activity of the catalyst. Moreover, by performing the ring-opening polymerization in the above temperature range, a polylactic acid polymer having a desired high molecular weight can be easily formed and the generation of by-products can be minimized. Further, a polylactic acid polymer having a desired high molecular weight can be easily prepared without decomposing the SnHPO₃ catalyst and without changing the color of the polymer. Meanwhile, when the reaction temperature is less than 150°C, the activity of the ring-opening polymerization may be lowered.

More preferably, the ring-opening polymerization can be performed at 160°C or more, 170°C or more, 180°C or more, or 240°C or less. Within the above range, a polylactic acid polymer having a desired high molecular weight can be easily prepared without the above-mentioned problems.

The ring-opening polymerization reaction is performed in the presence of a SnHPO₃ catalyst. Particularly, the rate of change in the weight average molecular weight defined by the following Equation 1 has a positive value: Rate of change in weight average molecular weight = (M(t+30) - M(t))/M(t) * 100(%)
M(t) is the weight average molecular weight of the polylactic acid polymer prepared according to the ring-opening polymerization reaction at a temperature of t°C,
M₍ₜ₊₃₀₎ is the weight average molecular weight of the polylactic acid polymer prepared according to the ring-opening polymerization reaction at a temperature of t+30°C, and
t is 150°C to 250°C.

The rate of change is the rate of change in the weight average molecular weight of polylactic acid prepared by increasing the ring-opening polymerization reaction temperature by 30°C, and the rate of change may be interpreted as an index explaining the degree of decomposition of the catalyst at high temperature. The fact that the rate of change has a positive value means that the weight average molecular weight of the polymer increases as the polymerization reaction temperature increases. Theoretically, it means more than 0%, but practically, it can mean about 1% or more, about 3% or more, or about 5% or more.

In the case of Sn(Oct)₂ conventionally used in the ring-opening polymerization, there was a problem that since the catalyst is decomposed within the high polymerization temperature of the ring-opening reaction, the weight average molecular weight of the polymer is rather decreased, which makes it difficult to realize the desired high molecular weight. Therefore, the ring-opening polymerization reaction according to the present disclosure have solved such problems while the rate of change in the weight average molecular weight has a positive value as described above.

Preferably, the rate of change in the weight average molecular weight may be 10% to 80%, 20% to 70% or 40% to 60%. Even when the polymerization reaction is performed at a high temperature within the above range, it is suitable for realizing excellent high molecular weight without decomposing the catalyst, and is economical because the catalyst can be recycled.

The measurement of the weight average molecular weight of the polymer will be described in more detail in Experimental Examples described later.

On the other hand, if necessary, before the ring-opening polymerization, the polymerization reactor is replaced with an inert condition. Specifically, after fastening the reactor, a vacuum-argon purge is performed about three times, so that the inside of the reactor can be replaced with an inert condition.

Further, if necessary, before the ring-opening polymerization, the lactide and SnHPO₃ catalyst may be each independently pretreated at 50°C to 70°C and 7 mbar to 10 mbar for 1 hour to 3 hours. Oxygen, moisture, impurities, etc. inside the lactide and SnHPO₃ catalyst may be removed through the pretreatment step.

### (Polylactic Acid Polymer)

According to one embodiment of the present disclosure, there is provided a polylactic acid polymer prepared according to the above-mentioned preparation method.

The weight average molecular weight (Mw) of the polylactic acid polymer may be 20,000 to 50,000, preferably 30,000 to 50,000.

The number average molecular weight (Mn) of the polylactic acid polymer may be 18,000 to 33,000, preferably, 25,000 to 33,000.

The polydispersity index (PDI) of the polylactic acid polymer may be 1.18 to 1.5, preferably, 1.2 to 1.5.

The Y.I. (yellow index) of the polylactic acid polymer is 13 to 33, preferably 13 to 31, or 13.3 to 30.3.

Methods for measuring the weight average molecular weight, the number average molecular weight, the polydispersity index and the Y.I. will be described in detail in Experimental Examples described later.

### (Article)

According to yet another embodiment of the present disclosure, there is provided an article including the polylactic acid polymer.

### [Advantageous Effects]

As described above, the method for preparing a polylactic acid polymer according to the present disclosure provides a method for preparing a polylactic acid polymer that has a desired degree of high molecular weight by using a specific catalyst in a lactide ring-opening polymerization reaction and controlling the rate of change in the molecular weight of the polymer according to changes in polymerization temperature within a specific range.

Also, it is possible to prepare a polylactic acid polymer which facilitates the removal and reuse of the catalyst after completion of the reaction and is excellent in economy by using a catalyst exhibiting excellent stability even under high-temperature polymerization reaction conditions, and also which does not cause changes in physical properties of the polymer due to catalytic decomposition.

In addition, the polylactic acid polymer prepared according to the above method has a high molecular weight and is excellent in color change stability.

### [BRIEF DESCRIPTION OF THE DRAWING]

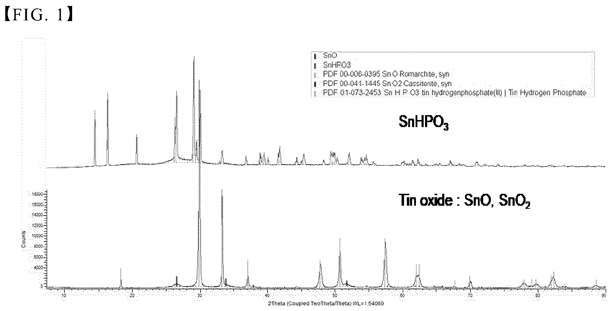

Fig. 1 shows the results of XRD analysis of the powder-type SnHPO₃ catalyst obtained in Preparation Example 1.

### [DETAILED DESCRIPTION OF THE EMBODIMENTS]

Hereinafter, embodiments of the present disclosure will be explained in detail with reference to examples. However, the following examples are for illustrative purposes only, and the detailed description of the present disclosure is not limited by these examples.

### <Preparation Example>

### Preparation Example 1 - Synthesis of SnHPO₃, Tin(II) phosphite catalysts

A 3-neck round flask was prepared in an oil bath, and 10 g of phosphorous acid (H₃PO₃) was charged into the flask, and then dissolved by raising the temperature to 74°C while refluxing under nitrogen substitution conditions. Then, while raising the temperature of the flask to 180°C, 9.5 g of tin(II) oxide was added divisionally over 5 to 10 times and dissolved.

When the viscous mixture in the flask changes to a transparent state, the oil bath turned off and the temperature was slowly lowered to room temperature (24±1°C). When water was added to the flask, a solid was precipitated. It was washed with methanol at 5±2°C and water at 5±2°C to remove residual H₃PO₃, which was vacuum-dried to obtain a solid powdery catalyst. Then, the obtained powdery catalyst was subjected to XRD analysis, and the results are shown in Fig. 1.

No peak of tin oxide existed on the XRD pattern, thus confirming that the catalyst was synthesized. PLA catalyst SnHPO₃ single phase was observed, and tin oxide and H₃PO₃ crystal phases used for synthesis were not observed. The grain size of SnHPO₃ catalyst was about 150~165 nm.

### <Examples and Comparative Examples>

### Example 1

After setting a 0.5 L lab-scale glass reactor, Ar condition was maintained overnight and the inside of the reactor was replaced with Ar. After the Viton O-ring was installed in a 500 mL beaker, lactide was added at about 30 to 40% (about 170 g) based on the level of the beaker. After fastening the reactor, it was maintained at 10 mbar for 1 minute using a diaphragm pump and a vacuum controller to proceed the leak test. Then, vacuum-argon purge was performed about 3 times using a Schlenk line, and the inside of the reactor was replaced with an inert condition and finally replaced with Ar condition.

The catalyst septum was opened, and 500 ppm mol of the SnHPO₃ powder catalyst of Preparation Example 1 (converted to lactide charging amount) (about 120 mg) was weighed and added. The reaction mixture was heated to 60°C (lower mantle 60°C) for about 2 hours under vacuum conditions using a Schlenk line to remove impurities. After replacing the reactor with Ar, the temperature was raised to 240°C (lower mantle 240°C, upper mantle 240°C). After the reaction temperature reached 240°C, the reaction proceeded for 3 hours to prepare a polylactic acid polymer.

### Example 2

A polylactic acid polymer was prepared in the same manner as in Example 1, except that in Example 1, the polymerization reaction was performed at a temperature of 210°C.

### Example 3

A polylactic acid polymer was prepared in the same manner as in Example 1, except that in Example 1, the polymerization reaction was performed at a temperature of 180°C.

### Comparative Examples 1 to 3

Polylactic acid polymers were prepared in the same manner as in Examples 1 to 3, except that in Examples 1 to 3, Sn(Oct)₂ catalyst was used in the content of 50 ppm mol instead of SnHPO₃ catalyst.

### <Experimental Example>

The characteristics of the polymers prepared in Examples and Comparative Examples were evaluated as follows.

### 1) Evaluation of molecular weight characteristics

The weight average molecular weight, number average molecular weight, and polydispersity index of the polymers prepared in the Examples and Comparative Examples were measured by gel permeation chromatography (GPC, Tosoh ECO SEC Elite), and the results are shown in Table 1 below.
Solvent: Chloroform (eluent)
Flow rate: 1.0 ml/min
Column temperature: 40°C
Standard: Polystyrene (corrected by the cubic function)

### 2) Evaluation of color change characteristics

For the polymers prepared in Examples and Comparative Examples, a pellet specimen was prepared with a twin-screw extruder, and the Y.I. (Yellow Index) of the prepared specimen was measured according to ASTM E 313 [D65/10], and the results are shown in Table 1 below.

**[Table 1]**

| Category | Molecular weight | | | Rate of change in weight average molecular weight (%) | Evaluation of color change |
|---|---|---|---|---|---|
| | Mn | Mw | PDI | | Y.I. |
| Example 1 | 32,080 | 47,040 | 1.47 | + 50.8% | 30.07 |
| Example 2 | 25,900 | 31,200 | 1.20 | + 45.8% | 22.18 |
| Example 3 | 18,200 | 21,400 | 1.18 | - | 13.44 |
| Comparative Example 1 | 54,200 | 77,500 | 1.43 | -41.2% | 48.52 |
| Comparative Example 2 | 66,600 | 109,400 | 1.64 | - 96.5% | 39.11 |
| Comparative Example 3 | 110,700 | 215,000 | 1.94 | - | 14.87 |

As can be seen in Table 1, it could be confirmed that in the case of Examples 1 to 3, as the ring-opening polymerization reaction temperature increases, the weight average molecular weight of the synthesized polymer increases. Thereby, it could be confirmed that it exhibits excellent activity without decomposing SnHPO₃ catalyst even when the polymerization reaction proceeds at high temperature.

On the other hand, it could be confirmed that in the case of Comparative Examples 1 to 3, as the ring-opening polymerization temperature increases, the weight average molecular weight of the synthesized polymer decreases, which decomposes the catalyst and significantly lowers its activity at high temperatures.

In addition, it could be confirmed that Comparative Example 3 polymerized at 180°C has a Y.I. value similar to Example 3 polymerized at the same temperature, but looking at Comparative Examples 2 and 1, as the polymerization temperature increases to 210°C and 240°C, the Y.I. value of the polymer significantly increases as compared to Examples.

## Claims

1. A method for preparing a polylactic acid polymer, the method comprising:
performing a ring-opening polymerization of lactide in the presence of a SnHPO₃ catalyst to prepare a polylactic acid polymer,
wherein a rate of change in a weight average molecular weight defined by the following Equation 1 has a positive value: Rate of change in weight average molecular weight = (M(t+30) - M(t))/M(t) * 100(%)
M(t) is the weight average molecular weight of the polylactic acid polymer prepared according to the ring-opening polymerization reaction at a temperature of t°C,
M₍ₜ₊₃₀₎ is the weight average molecular weight of the polylactic acid polymer prepared according to the ring-opening polymerization reaction at a temperature of t+30°C, and
t is 150°C to 250 °C,
wherein the average molecular weight is measured using GPC as indicated in the description.

2. The method for preparing a polylactic acid polymer according to claim 1, wherein:
the rate of change in the weight average molecular weight defined by Equation 1 is 10% to 80%.

3. The method for preparing a polylactic acid polymer according to claim 1, wherein:
the ring-opening polymerization is performed at 150°C to 240°C.

4. The method for preparing a polylactic acid polymer according to claim 1, wherein:
the SnHPO₃ catalyst is contained in an amount of 100 ppm mol to 1,000 ppm mol relative to the lactide.

5. The method for preparing a polylactic acid polymer according to claim 1, wherein:
the lactide and the SnHPO₃ catalyst are each independently pretreated at 50°C to 70°C and 7 mbar to 10 mbar for 1 hour to 3 hours.

6. The method for preparing a polylactic acid polymer according to claim 1, wherein:
the polylactic acid polymer has a weight average molecular weight of 20,000 to 50,000.

7. The method for preparing a polylactic acid polymer according to claim 1, wherein:
the polylactic acid polymer has a number average molecular weight of 18,000 to 33,000.

8. The method for preparing a polylactic acid polymer according to claim 1, wherein:
the polylactic acid polymer has a PDI of 1.18 to 1.5.

## Patentansprüche

1. Verfahren zur Herstellung eines Polymilchsäurepolymers, wobei das Verfahren folgendes umfasst:
Durchführen einer Ringöffnungspolymerisation von Lactid in Gegenwart eines SnHPO₃-Katalysators zur Herstellung eines Polymilchsäurepolymers,
wobei die Änderungsrate eines gewichtsmittleren Molekulargewichts, definiert durch die folgende Gleichung 1, einen positiven Wert hat: Änderungsrate des gewichtsmittleren Molekulargewichts = (M(t+30) - M(t))/M(t) * 100 (%)
M(t) ist das gewichtsmittlere Molekulargewicht des Polymilchsäurepolymers, das gemäß der Ringöffnungspolymerisationsreaktion bei einer Temperatur von t°C hergestellt wurde,
M₍ₜ₊₃₀₎ ist das gewichtsmittlere Molekulargewicht des Polymilchsäurepolymers, das gemäß der Ringöffnungspolymerisationsreaktion bei einer Temperatur von t+30°C hergestellt wurde, und
t ist 150°C bis 250°C,
wobei das gewichtsmittlere Molekulargewicht unter Verwendung von GPC, wie in der Beschreibung angegeben, gemessen wird.

2. Verfahren zur Herstellung eines Polymilchsäurepolymers gemäß Anspruch 1, bei dem:
die Änderungsrate des gewichtsmittleren Molekulargewichts, wie in Gleichung 1 definiert, 10 % bis 80 % beträgt.

3. Verfahren zur Herstellung eines Polymilchsäurepolymers gemäß Anspruch 1, bei dem:
die Ringöffnungspolymerisation bei 150°C bis 240°C durchgeführt wird.

4. Verfahren zur Herstellung eines Polymilchsäurepolymers gemäß Anspruch 1, bei dem:
der SnHPO₃-Katalysator in einer Menge von 100 ppm mol bis 1.000 ppm mol, bezogen auf das Lactid, enthalten ist.

5. Verfahren zur Herstellung eines Polymilchsäurepolymers gemäß Anspruch 1, bei dem:
das Lactid und der SnHPO₃-Katalysator jeweils unabhängig bei 50°C bis 70°C und 7 mbar bis 10 mbar für 1 Stunde bis 3 Stunden vorbehandelt werden.

6. Verfahren zur Herstellung eines Polymilchsäurepolymers gemäß Anspruch 1, bei dem:
das Polymilchsäurepolymer ein gewichtsmittleres Molekulargewicht von 20.000 bis 50.000 aufweist.

7. Verfahren zur Herstellung eines Polymilchsäurepolymers gemäß Anspruch 1, bei dem:
das Polymilchsäurepolymer ein zahlenmittleres Molekulargewicht von 18.000 bis 33.000 aufweist.

8. Verfahren zur Herstellung eines Polymilchsäurepolymers gemäß Anspruch 1, bei dem:
das Polymilchsäurepolymer einen PDI von 1,18 bis 1,5 aufweist.

## Revendications

1. Procédé de préparation d'un polymère de polyacide lactique, le procédé comprenant :
la mise en œuvre d'une polymérisation par ouverture de cycle d'un lactide en présence d'un catalyseur SnHPO₃ pour préparer un polymère de polyacide lactique,
dans lequel un taux de changement d'un poids moléculaire moyen en poids défini par l'équation 1 suivante a une valeur positive : Taux de changement du poids moléculaire moyen en poids = (M(t+30) - M(t))/M(t) * 100(%)
M₍ₜ₎ est le poids moléculaire moyen en poids du polymère de polyacide lactique préparé selon la réaction de polymérisation par ouverture de cycle à une température de t °C,
M₍ₜ₊₃₀₎ est le poids moléculaire moyen en poids du polymère de polyacide lactique préparé selon la réaction de polymérisation par ouverture de cycle à une température de t+30 °C, et
t est 150 °C à 250 °C,
dans lequel le poids moléculaire moyen est mesuré par GPC comme indiqué dans la description.

2. Procédé de préparation d'un polymère de polyacide lactique selon la revendication 1, dans lequel :
le taux de changement du poids moléculaire moyen en poids défini par l'équation 1 est de 10 % à 80 %.

3. Procédé de préparation d'un polymère de polyacide lactique selon la revendication 1, dans lequel :
la polymérisation par ouverture de cycle est mise en oeuvre à 150 °C à 240 °C.

4. Procédé de préparation d'un polymère de polyacide lactique selon la revendication 1, dans lequel :
le catalyseur SnHPO₃ est contenu en une quantité de 100 ppm molaires à 1 000 ppm molaires par rapport au lactide.

5. Procédé de préparation d'un polymère de polyacide lactique selon la revendication 1, dans lequel :
le lactide et le catalyseur SnHPO₃ sont chacun prétraités indépendamment à 50 °C à 70 °C et sous 7 mbar à 10 mbar pendant 1 heure à 3 heures.

6. Procédé de préparation d'un polymère de polyacide lactique selon la revendication 1, dans lequel :
le polymère de polyacide lactique présente un poids moléculaire moyen en poids de 20 000 à 50 000.

7. Procédé de préparation d'un polymère de polyacide lactique selon la revendication 1, dans lequel :
le polymère de polyacide lactique présente un poids moléculaire moyen en nombre de 18 000 à 33 000.

8. Procédé de préparation d'un polymère de polyacide lactique selon la revendication 1, dans lequel :
le polymère de polyacide lactique présente un PDI de 1,18 à 1,5.
